# EUROPÄISCHE PATENTSCHRIFT

(11) **EP 1 028 863 B1**
(45) Veröffentlichungstag und Bekanntmachung des Hinweises auf die Patenterteilung: **17.10.2001**
(21) Anmeldenummer: 98955539.6
(22) Anmeldetag: 04.11.1998
(51) Int. Cl.: B60J 10/00

(54) **DICHTUNGSVERBINDUNGSELEMENT, DICHTUNGSENDSTÜCK UND DICHTUNG**
SEALING CONNECTING ELEMENT, SEALING END PIECE AND A SEAL
ELEMENT D'ASSEMBLAGE DE JOINT, EMBOUT DE JOINT ET JOINT

(30) Priorität: 12.11.1997 DE 29720053 U
(43) Veröffentlichungstag der Anmeldung: 23.08.2000
(73) Patentinhaber: METEOR GUMMIWERKE K.H. BÄDJE GMBH & CO., 31167 Bockenem (DE)
(72) Erfinder: BORMANN, Josef, D-31177 Harsum (DE); WEDDERKOPF, Gero, D-31141 Hildesheim (DE)
(74) Vertreter: Kosel, Peter, Dipl.-Ing.
(86) Internationale Anmeldenummer: EP9807032
(87) Internationale Veröffentlichungsnummer: WO9924279

(56) Entgegenhaltungen:
- EP-A- 0 378 419
- EP-A- 0 395 444
- DE-A- 3 629 343
- DE-A- 4 243 043
- US-A- 4 712 826
- US-A- 5 007 761
- PATENT ABSTRACTS OF JAPAN vol. 13, no. 473 (M-884), 26. Oktober 1989 & JP 01 186447 A (NISHIKAWA RUBBER), 25. Juli 1989
- PATENT ABSTRACTS OF JAPAN vol. 8, no. 80 (M-289), 12. April 1984 & JP 58 224810 A (NISSAN JIDOSHA), 27. Dezember 1983

## Beschreibung

Die Erfindung betrifft ein Dichtungsverbindungselement, ein Dichtungsendstück sowie eine Dichtung.

In vielen Bereichen des täglichen Lebens werden Dichtungen verwendet, um bestimmte Räume voneinander oder gegenüber der Umwelt flüssigkeits- und/oder gasdicht abzuschließen. Ein besonders wichtiger Einsatzbereich für Dichtungen ist dabei der Bereich von Türen und Klappen, an welchen regelmäßig infolge von Montageungenauigkeiten zum Teil große Dichtspalte auftreten.

Ein besonderes Anwendungsgebiet für Dichtungen ist der Kraftfahrzeugbau, der regelmäßig sehr hohe Anforderungen an das Dichtverhalten einer Dichtung und an deren Belastbarkeit hinsichtlich von Umwelteinflüssen wie Temperaturschwankungen, UV-Einstrahlung, Lösungsmitteleinfluß und anderen Umweltfaktoren aufweist. Um unter gegebenenfalls extremen Umweltbedingungen eine hohe Lebensdauer gewährleisten zu können, ist es aus der Praxis bekannt, Elastomer-Dichtungen zu verwenden. Die für solche Elastomer-Dichtungen zumeist verwendeten Werkstoffe sind EPDM (Ethylen-Propylen-Dien-Copolymerisate), NBR (Natural Butadiene Rubber), NR/SBR-Blends und CR-Werkstoffe (Controlled Rheology Polypropylenwerkstoffe).

Aus der Praxis ist bekannt, die genannten Werkstoffe zu Strangprofilen zu verarbeiten, welche anschließend durch Zuschneiden und Verkleben zu dreidimensionalen Strukturen konfektioniert werden. Aus der Praxis ist auch bekannt. die EPDM-Dichtungsprofile an ihren Ecken mittels einer TPE-V-Anspritztechnik zu verbinden (Buch: Thermoplastische Elastomere Herausforderung an die Elastomerverarbeiter/VDI-Gesellschaft Kunststofftechnik, VDI-Verlag GmbH 1997, Seite 145). In den genannten dreidimensionalen Strukturen werden die Dichtungen dann den Kunden übergeben, welche sie in Fahrzeuge oder andere Strukturen einbauen.

Um im Markt wettbewerbsfähig zu sein, ist es erforderlich, leicht montierbare Dichtungen schnell und in großer Stückzahl zur Verfügung stellen zu können. Dabei stellt das Dichtungsstrangmaterial wegen seiner Flexibilität bei der Verarbeitung hohe Anforderungen an die im Fertigungsprozeß beschäftigten Personen.

Aus der JP-A-1-186 447 A ist es an sich bekannt, die Stirnflächen zweier Dichtungsprofilstränge in ein Kupplungsstück aus hartem Polyamid einzustecken und miteinander zu verkleben.

Aus der JP-A-22A 810/83 ist es an sich bekannt, stumpf aneinanderstoßende Fensterabdichtprofile durch eine örtlich angeformte Dichtlippe gegeneinander abzudichten.

Die DE-A-36 29 343 zeigt als an sich bekannt einen Eckverbinder mit verjüngten Dornen, auf die jeweils mit einem Hohlraum eine Profilleiste aufgesteckt und verklebt wird.

Aus der US-A-4 712 826 ist es an sich bekannt, ein Fenster an einer Kraftfahrzeugkarosserie zu befestigen. Dazu werden das Fenster, Dichtungsprofile und ein Eckstück positioniert. Anschließend werden die Zwischenräume mit einem Dichtungskleber ausgefüllt.

Gemäß der EP-A-0 395 444 wird in an sich bekannter Weise eine Endkappe auf eine offene Stirnseite eines Klemmprofils geschoben. Das Klemmprofil wurde zuvor auf einen Karosserieflansch aufgesteckt.

Aus der EP-A-0 378 419, Fig. 1 und 5, ist es an sich bekannt, an eine Fensterführungsstruktur eine Halterung für einen Rückblickspiegel anzubauen. Die Halterung weist ein teilweise mit Polymer überzogenes Endstück auf. Verbindungszapfen angrenzender Rahmenprofile weisen einen rechteckigen Querschnitt auf und werden in einen offenen Aufnahmekanal des Eckstücks eingebracht.

Die US-A-5 007 761 A zeigt als an sich bekannt die lösbare Verbindung einer Fensterschachtdichtung mit einer Türdichtung für ein Coupé. An die Fensterschachtdichtung ist ein Übergangsstück anvulkanisiert. Das Übergangsstück weist eine Ausnehmung auf, in die ein oberes Ende der Türdichtung von unten einsteckbar ist. In diesem eingesteckten Zustand wird die Verbindung axial gesichert durch eine Klaue des Übergangsstücks, die in eine komplementäre Ausnehmung der Türdichtung eingreift.

Gemäß der DE-A-42 43 043 ist es an sich bekannt, zwei Enden eines einen Textilbezug aufweisenden Klemmprofils stumpf aneinanderzusetzen. Das Klemmprofil weist einen Dichtungsschlauch auf, in dessen Hohlraum ein komplementärer, gummielastischer Zapfen jeweils mit einem Teil seiner Länge als Kupplungseiement eingeführt wird.

Der Erfindung liegt die Aufgabe zugrunde, die Herstellung von Dichtungen zu erleichtern.

Die Lösung dieser Aufgabe erfolgt erfindungsgemäß mit den Merkmalen der Ansprüche 1, 9 bzw. 11.

Gemäß der Erfindung ist es vorgesehen, Dichtungsverbindungselemente und/oder Dichtungsendstücke als separate Formteile aus einem thermoplastischen Elastomer herzustellen und diese Formteile erst kurz vor dem Einbau einer Dichtung mit Dichtungsprofilsträngen zu einer kompletten Dichtung zu verbinden. Durch die getrennte Herstellung der Dichtungsverbindungsgelemente und/oder Dichtungsendstücke einerseits bzw. der Dichtungsprofilstränge andererseits und durch deren separaten Transport wird einerseits die Produktion der Einzelteile erleichtert und andererseits der Transportaufwand minimiert. Während es gemäß dem Stand der Technik erforderlich ist, Dichtungsprofilstränge per Hand zur Verbindung mittels einer Klebung oder eines angespritzten TPE-Eckstücks in einer entsprechenden Form zu positionieren, läßt sich die Herstellung der erfindungsgemäßen Dichtungsverbindungselemente und Dichtungsendstücke vollautomatisch durchführen.

Nach einem etwaigen Transport der einzelnen Dichtungsteile, der weniger Raum erfordert als der kompletter Dichtungen, lassen sich diese dann bausatzartig zu kompletten Dichtungen zusammenfügen, indem Dichtungsprofilstränge an den Profilführungsbereichen der Dichtungsverbindungselemente bzw. Dichtungsendstücke zur Anlage gebracht werden, wobei sich das Zusammenfügen besonders einfach durchführen läßt, wenn längere Dichtungsprofilstränge schon an eine starre Struktur angebaut und somit fixiert sind.

Durch die erfindungsgemäßen Dichtungsverbindungselemente und Dichtungsendstücke aus einem thermoplastischen Elastomer wird eine Bausatzkomponente zur Verfügung gestellt, welche es erlaubt, bei der Montage einer Dichtung an einer nicht maßhaltig hergestellten Struktur schnell und einfach dadurch zu reagieren, daß anstelle eines Dichtungsprofilstrangs einer vorgegebenen Länge ein anderer Dichtungsprofilstrang mit individuell angepaßter Länge verwendet wird. Dadurch werden Montagekosten und Ausschuß minimiert.

Das den erfindungsgemäßen Dichtungen und den in diesen verwendeten Dichtungsverbindungselementen bzw. Dichtungsendstücken zugrunde liegende Bausatzkonzept ist insbesondere dann vorteilhaft, wenn großräumige Dichtungen oder Kleinserien von Dichtungen herzustellen sind, da sich dann die erleichterte Handhabbarkeit und die Möglichkeit des Zurückgreifens auf Normteile besonders auszahlt.

Vorzugsweise ist der Profilführungsbereich dünnwandig ausgeführt, so daß nur ein geringer Versatz zwischen der Außenkontur des Dichtungsprofilstrangs und der Außenkontur des Dichtungsverbindungselements auftritt. Dieser Versatz und eine damit zusammenhängende Undichtigkeit. kann weiter vermindert werden, wenn der Profilführungsbereich gegen Null auslaufend ausgeführt ist.

Bei Kraftfahrzeug-Karosseriedichtungen zur Abdichtung des Motorraumes besteht häufig der Wunsch, anschließend an einer umlaufenden Dichtung ein Einbauteil separat abzudichten. An solchen Stellen treffen dann drei Dichtungsprofilstränge aufeinander, welche miteinander verbunden werden müssen. Um hier die Gefahr von Undichtigkeiten und die Montagekosten zu verringern ist es vorteilhaft, einen Halteabschnitt des Dichtungsverbindungselements so zu gestalten, daß eine Befestigung an einem durchlaufenden Dichtungsprofilstrang möglich ist.

Eine besonders einfache Montage ergibt sich, wenn das erfindungsgemäße Dichtungsverbindungselement einen Halteabschnitt zum Anklemmen des Verbindungselements an einen zu verbindenden Dichtungsprofilstrang aufweist. In diesem Fall ist es möglich, auf ein Verkleben oder Verschweißen des Dichtungsverbindungselements mit dem jeweiligen Dichtungsprofilstrang zu verzichten.

Wenn ein Verkleben oder Verschweißen vorgesehen ist, um eine dauerhafte Verbindung der einzelnen Dichtungskomponenten zu gewährleisten, ist es vorteilhaft, die Dichtungsverbindungselemente mit einem Anschlag zu versehen, der als Widerlager für mit dem Verbindungselement steckend zu verbindende Dichtungsprofilstränge ausgebildet ist. Eine solche Gestaltung erlaubt eine leichte Montage, insbesondere wenn die Dichtungsverbindungselemente gegenüber den jeweiligen Dichtungsprofilsträngen ein kleines Übermaß aufweisen.

Die Herstellung von komplizierten Dichtungen in Kleinserie wird erleichtert, wenn zu einem Dichtungsprofilstrang-Typ unterschiedliche, vorzugsweise zu einer Gehrungsebene spiegelsymmetrische Dichtungsverbindungselemente zur Verfügung stehen. Diese Dichtungsverbindungselemente lassen sich dann ähnlich wie Bögen von Sanitär-Abwasserrohren sehr einfach mit Dichtungsprofilsträngen zu einer gewünschten dreidimensionalen Struktur zusammenstecken.

Weitere vorteilhafte Ausgestaltungen und Weiterbildungen der Erfindung ergeben sich aus den Untersnsprüchen sowie aus den Zeichnungen im Zusammenhang mit der Beschreibung.

Es zeigen:
- Fig. 1: eine erste Ausführungsform eines erfindungsgemäßen Dichtungsverbindungselements mit einem eingesteckten Dichtungsprofilstrang,
- Fig. 2: einen Schnitt durch das Dichtungsverbindungselement in Fig. 1 gemäß der Linie II-II in Fig. 1,
- Fig. 3: einen Schnitt durch das Dichtungsverbindungselement und den Dichtungsprofilstrang in Fig. 1 gemäß der Linie III-III in Fig. 1,
- Fig. 4: einen Schnitt durch das Dichtungsverbindungselement und den Dichtungsprofilstrang in Fig. 1 gemäß der Linie IV-IV in Fig. 1,
- Fig. 5: den Dichtungsprofilstrang in den Fig. 1 bis 4 in vergrößerter Darstellung,
- Fig. 6: eine zweite Ausführungsform eines erfindungsgemäßen Dichtungsverbindungselements, welches seitlich an einen durchlaufenden Dichtungsprofilstrang angeklemmt ist,
- Fig. 7: einen Schnitt durch das Dichtungsverbindungselement und den Dichtungsprofilstrang in Fig. 6 gemäß der Linie VII-VII in Fig. 6 und 8,
- Fig. 8: einen Schnitt durch das Dichtungsverbindungselement und den Dichtungsprofilstrang in Fig. 6 gemäß der Linie VIII-VIII in Fig. 6,
- Fig. 9: eine dritte Ausführungsform eines erfindungsgemäßen Dichtungsverbindungs elements mit einem Dichtungsprofilstrang,
- Fig. 10: einen Schnitt durch den Dichtungsprofilstrang in Fig. 9 gemäß der Linie X-X in Fig. 9,
- Fig. 11: einen Schnitt durch das Dichtungsverbindungselement und den Dichtungsprofilstrang in Fig. 9 gemäß der Linie XI-XI in Fig. 9,
- Fig. 12: einen Schnitt durch das Dichtungsverbindungselement und den Dichtungsprofilstrang in Fig. 9 gemäß der Linie XII-XII in Fig. 9,
- Fig. 13: eine vierte Ausführungsform eines erfindungsgemäßen Dichtungsverbindungselements mit einem Dichtungsprofilstrang,
- Fig. 14: einen Schnitt durch den Dichtungsprofilstrang in Fig. 13 gemäß der Linie XIV-XIV in Fig. 13,
- Fig. 15: einen Schnitt durch das Dichtungsverbindungselement und den Dichtungsprofilstrang in Fig. 13 gemäß der Linie XV-XV in Fig. 13, und
- Fig. 16: einen Schnitt durch das Dichtungsverbindungselement und den Dichtungsprofilstrang in Fig. 13 gemäß der Linie XVI-XVI in Fig. 13.

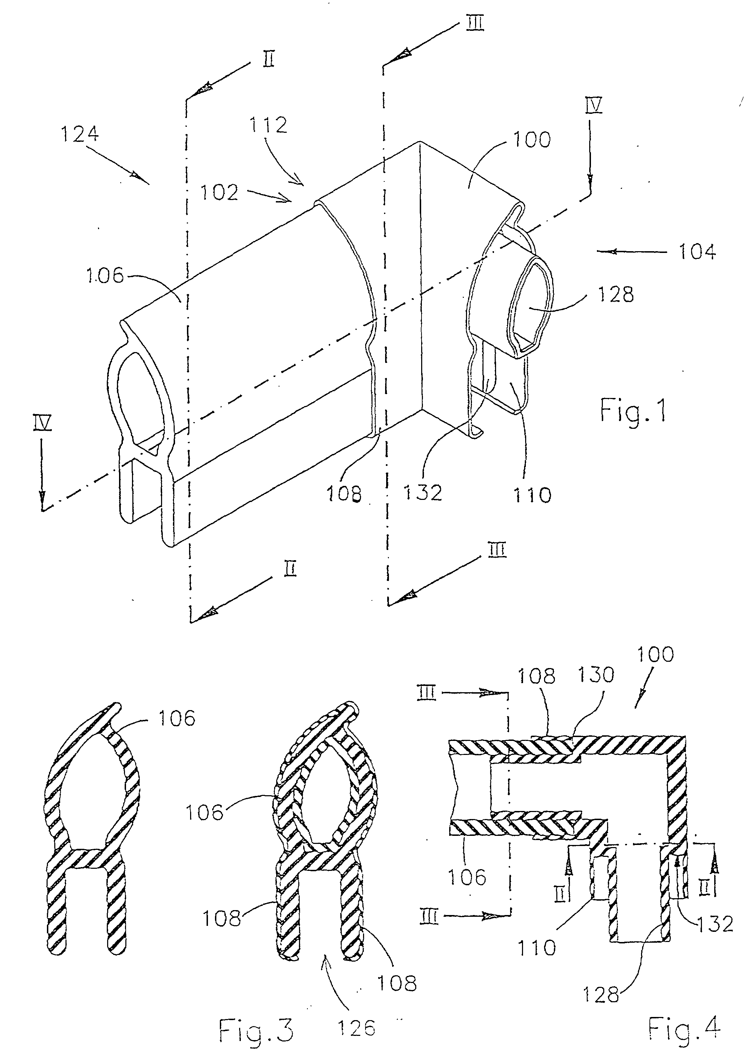

Das in den Fig. 1 bis 4 gezeigte Dichtungsverbindungselement 100 gemäß einer ersten Ausführungsform ist als 90°-Eckstück für eine Motorraumdichtung 124 vorgesehen. Es ist symmetrisch zu einer Gehrungsebene ausgebildet und weist ein erstes Einsteckende 102 und ein zweites Einsteckende 104 zur Aufnahme von Dichtungsprofilsträngen 106 auf.

Im Bereich der Einsteckenden 102, 104 weist das Dichtungsverbindungselement 100 dünnwandige Profilführungsbereiche 108, 110 auf, welche an der Außenwand eines eingesteckten Dichtungsprofilstrangs 106 so zur Anlage kommen, daß zwischen Dichtungsprofilstrang und Dichtungsverbindungselement nur eine minimale Stufe 112 verbleibt, welche sich nicht nennenswert auf das Dichtverhalten der Dichtung 124 auswirkt.

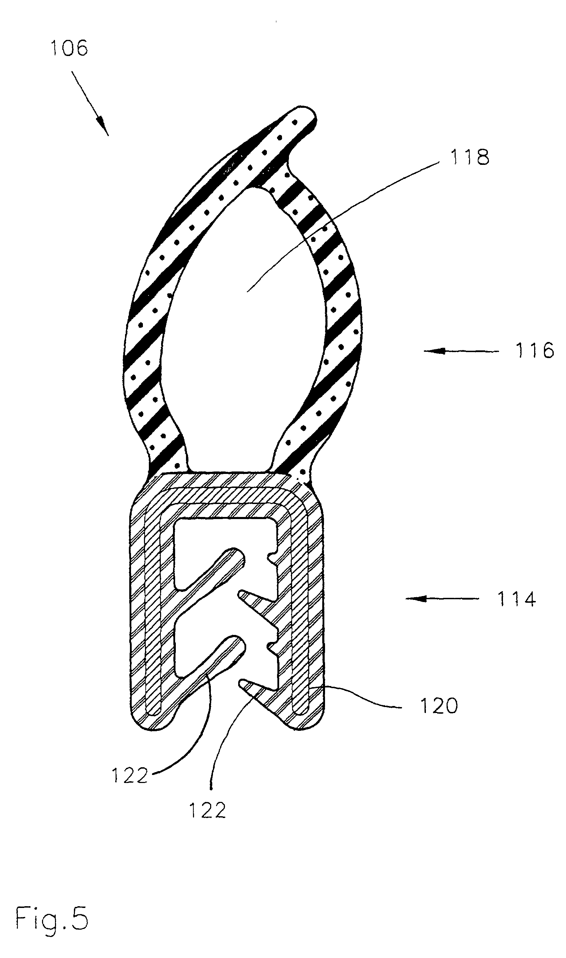

Das Dichtungsverbindungselement 100 gemäß der ersten Ausführungsform ist für einen Dichtungsprofilstrang 106 aus EPDM vorgesehen, welcher im Detail in Fig. 5 gezeigt ist. Dieser Dichtungsprofilstrang 106 weist einen Fußbereich 114 zur Befestigung des Dichtungsprofilstrangs 106 an einem Metallsteg (nicht gezeigt) und einen Dichtungsbereich 116 aus Moosgummi mit einer Shore-Härte 15 auf, welcher) zusammen mit dem Fußbereich 114 eine kanalartige Hohlkammer 118 bildet. In dem Fußbereich 114 ist in einem Weichgummi (Shore-Härte 60) ein im Querschnitt U-förmiger Einleger 120 aus Metall eingeschlossen, welcher dem Fußbereich 114 des Dichtungsprofilstrangs 106 die zum Halt an dem Metallsteg nötige Steifigkeit verleiht. Zum Festhalten des Dichtungsprofiistrangs 106 an dem Metallsteg sind federnde Nasen 122 vorgesehen.

Das Dichtungsverbindungselement 100 ist so gestaltet, daß es mit seiner Außenkontur dem Verlauf des Dichtungsprofilstrangs 106 folgt. Dadurch wird ein Metallsteg, auf welchen eine aus Dichtungsprofilsträngen 106 und Dichtungsverbindungselementen 100 bestehende Dichtung 124 aufgesteckt wird, vollständig umschlossen, wodurch eine Korrosion des Metallstegs verhindert werden kann. Lediglich im Aufsteckbereich des Fußbereichs 114 des Dichtungsprofilstrangs 106 weist das Dichtungsverbindungselement 100 eine Durchbrechung auf, die eine klemmende Verbindung von Dichtungsprofilstrang 106 und Metallsteg erlaubt.

Um eine gute Führung des Dichtungsprofilstrangs 106 an dem Dichtungsverbindungselement 100 zu erlauben und die Montage zu erleichtern, ist an dem Dichtungsverbindungselement ein an seinem Rand angefaster Kernabschnitt 128 vorgesehen, dessen Querschnittsprofil an das Querschnittsprofil der Hohlkammer 118 angepaßt ist.

Das Dichtungsverbindungselement 100 weist im Bereich seines ersten und zweiten Einsteckendes 102, 104 Anschläge 130, 132 auf, gegen welche einzusteckende Dichtungsprofilstränge 106 geschoben werden können. Wenn präzise vorgeschnittene Dichtungsprofilstränae 106 verwendet werden, lassen sich unter Beachtung dieser Anschläge 130, 132 extrem maßhaltige Dichtungen herstellen.

Das Dichtungsverbindungselement 100 ist aus einem thermoplastischen Elastomer, vorzugsweise aus einem Polymerblend oder einem Block Copolymer und insbesondere aus TPE-V in einem vollautomatischem Prozeß spritzgegossen. Die zur Gehrungsebene spiegelsymmetrische Form erfordert beim Spritzgießen lediglich zwei Kerne, welche sich automatisch ziehen lassen. Das verwendete thermoplastische Elastomermaterial ist dabei so eingestellt, daß eine Deformation des Dichtungsverbindungselements 100 in seinem Dichtungsbereich 116 um mindestens 50% seiner Höhenerstreckung möglich ist.

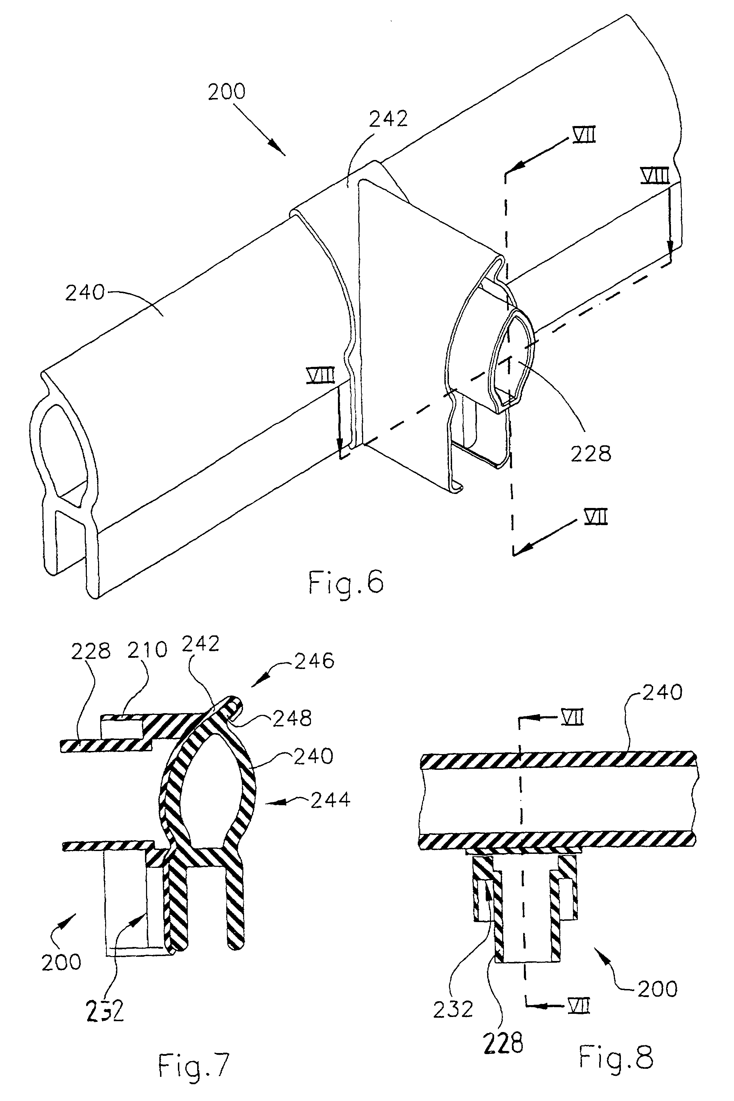

Das in den Fig. 6 bis 8 gezeigte Dichtungsverbindungselement 200 gemäß einer zweiten Ausführungsform weist hinsichtlich des Anschlusses an einem ersten Dichtungsprofilstrang eine Gestaltung auf, welche der Gestaltung des Dichtungsverbindungselements 100 gemäß der ersten Ausführungsform im Bereich seiner Einsteckenden 102, 104 entspricht. Zur Beschreibung des Dichtungsverbindungselements 200 gemäß der zweiten Ausführungsform werden daher zur Beschreibuno von Bereichen, die Bereichen des Dichtungsverbindungselements 100 gemäß der ersten Ausführungsform entsprechen, Bezugszeichen verwendet, welche gegenüber den entsprechenden Bezugszeichen bei der ersten Ausführungsform um 100 erhöht sind. Auf die entsprechende Beschreibung wird verwiesen.

Das Dichtungsverbindungselement 200 ist für eine Stoßverbindung eines ersten Dichtungsprofilstrangs (nicht gezeigt) an einem durchlaufenden zweiten Dichtungsprofilstrang 240 vorgesehen. Der durchlaufende Dichtungsprofilstrang 240 weist die gleichen Merkmale auf wie der Dichtungsprofilstrang 106. Um einen lückenlosen Übergang von dem ersten Dichtungsprofilstrang zu dem zweiten, durchlaufenden Dichtungsprofilstrang 240 zu gewährleisten, ist der Profilführungsbereich 210 des Dichtungsverbindungselements 200 bis an einen Halteabschnitt 242 durchgezogen, welcher an seinem oberen, am Dichtungsbereich 244 des Dichtungsstrangprofils 240 anliegenden Ende einen Haken 246 aufweist, welcher eine Dichtnase 248 des zweiten Dichtungsprofilstrangs 240 umgreift. Der Halteabschnitt 242 ist so geformt, daß er sich an die Außenkontur des zweiten Dichtungsprofilstrangs 240 anschmiegt.

Das Dichtungsverbindungselement 200 gemäß der zweiten Ausführungsform ist wie das Dichtungsverbindungselement 100 gemäß der ersien Ausführungsform aus einem thermoplastischen Elastomer durch Spritzgießen herstellbar, wobei dafür lediglich zwei Kerne erforderlich sind.

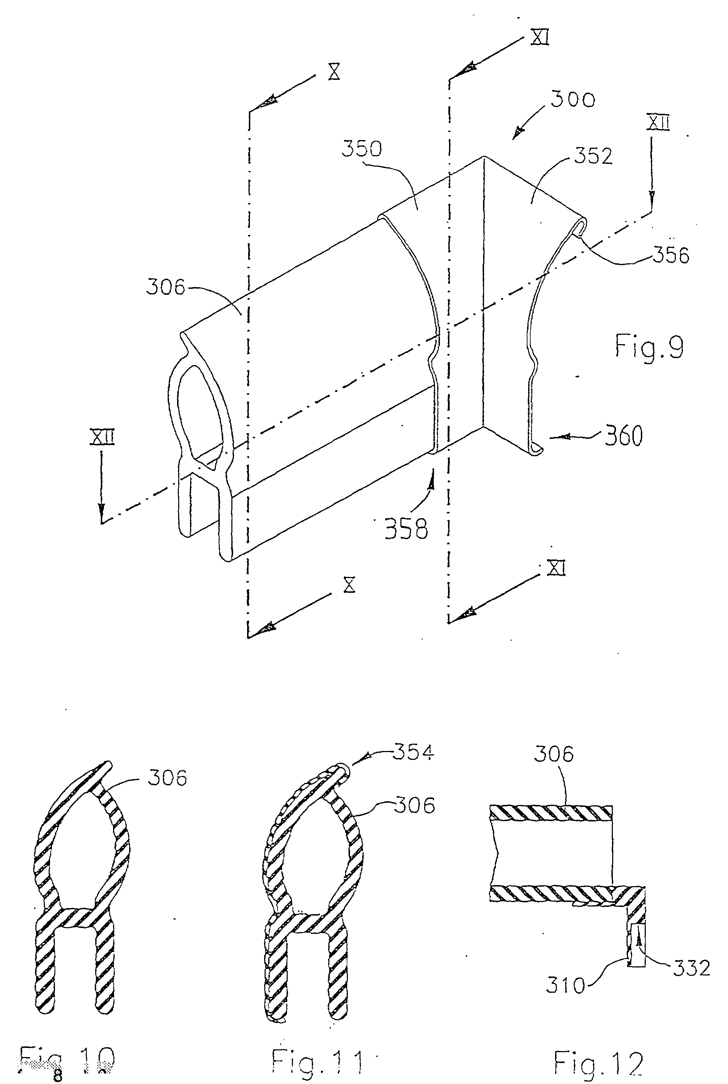

In den Fig. 9 bis 12 ist ein Dichtungsverbindungselement 300 aus TPE gemäß einer dritten Ausführungsform gezeigt. Dieses Dichtungsverbindungselement 300 stellt gegenüber dem Dichtungsverbindungselement 100 gemäß der ersten Ausführungsform eine vereinfachte Ausführungsform dar, so daß für Abschnitte, die Abschnitten des Dichtungsverbindungselements 100 gemäß der ersten Ausführungsform entsprechen, Bezugszeichen verwendet wurden, die um 200 erhöht sind. Auf die entsprechende Beschreibung wird verwiesen.

Das Dichtungsverbindungselement 300 besteht im wesentlichen aus zwei Halteabschnitten 350, 352, die so geformt sind, daß sie sich an einen zugehörigen Dichtungsprofilstrang 306 anschmiegen. Die beiden Halteabschnitte 350, 352 enden in einer gemeinsamen Gehrungsebene, die unter 45° zur Längserstreckung der Halteabschnitte 350, 352 verläuft. Sie weisen an ihrem oberen Ende jeweils einen Haken 354, 356 auf, mit welchen sich das Dichtungsverbindungselement 300 an den Dichtungsprofilsträngen 306 festhält. Am unten liegenden Ende des Dichtungsverbindungselements 300 ist je Halteabschnitt 350, 352 ein Widerlagerabschnitt 358, 360 vorgesehen, welcher ein Abrutschen des Dichtungsverbindungselements 300 von den jeweiligen Dichtungsprofilsträngen verhindert.

Das Dichtungsverbindungselement 300 ist besonders einfach durch Spritzgießen herstellbar und erfordert nur einen extrem geringen Materialaufwand. Es hat dafür den Nachteil, daß es stumpf abgeschnittene Dichtungsprofilstränge an ihren Stirnenden sowohl im Dichtbereich als auch im Fußbereich offenläßt.

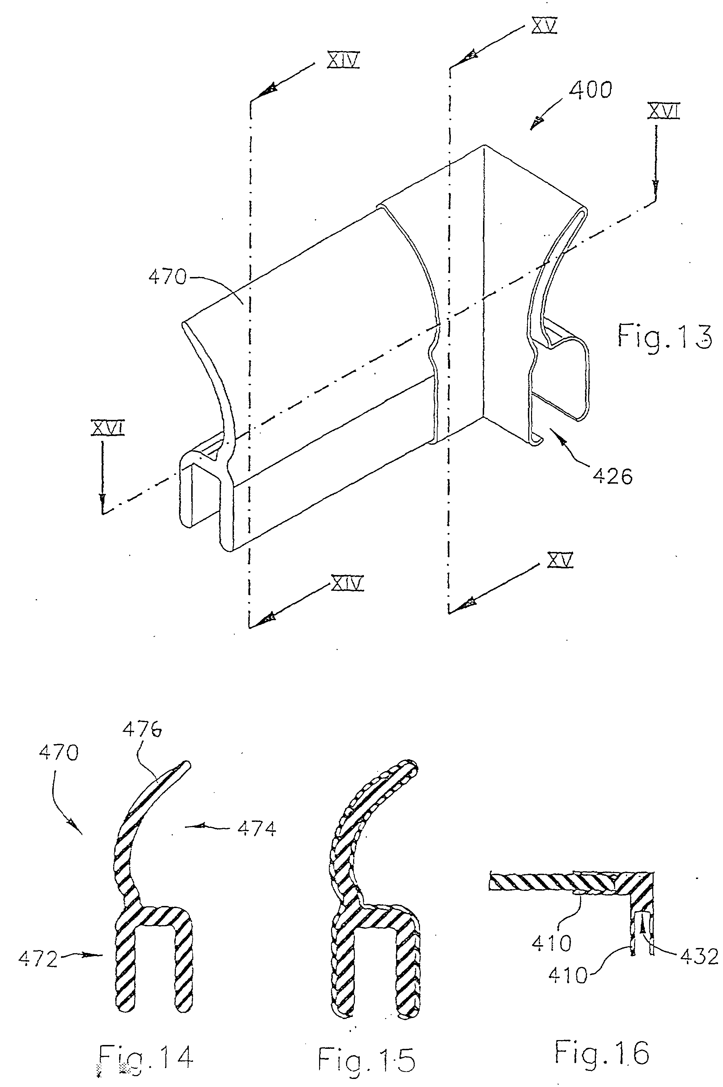

In den Fig. 13 bis 16 ist ein Dichtungsverbindungselement 400 gezeigt, welches für Dichtungsprofilstränge 470 gemäß einer zweiten Ausführungsform vorgesehen ist. Diese Dichtungsprofilstränge 470 weisen einen Fußbereich 472 auf, der hinsichtlich seiner Gestaltung mit einem innenliegenden Metalleinleger (nicht gezeigt) und mit Haltenasen (nicht gezeigt) dem Fußbereich 114 des Dichtungsprofilstrangs 106 entspricht, welcher in den Fig. 1 bis 5 gezeigt ist. Der Dichtungsprofilstrang 470 weist jedoch in seinem Dichtbereich 474 keine Kammer, sondern lediglich eine Dichtlippe 476 auf. Diese Dichtlippe 476 und der Fußbereich 472 werden von dem Dichtungsverbindungselement 400 gemäß der vierten Ausführungsform umschlossen, wobei nur der Aufsteckbereich 426 frei bleibt. Das Dichtungsverbindungselement 400 gemäß der vierten Ausführungsform, welches wie die übrigen Dichtungsverbindungselemente aus einem thermoplastischen Elastomer durch Spritzgießen herstellbar ist, weist einen besonders guten Kompromiß zwischen Materialverbrauch und Dichtverhalten auf, wobei hervorzuheben ist, daß der gesamte Fußbereich 472 der Dichtungsprofilstränge abgeschlossen wird, auch wenn die Dichtungsprofilstränge kostengünstig quer zu ihrer Längserstreckung abgetrennt werden.

## Patentansprüche

1. Dichtungsverbindungselement (100;200;300;400) zur dichtenden Verbindung mindestens eines ersten und eines zweiten Dichtungsprofilstrangs (106;240;306;470) deren Enden nicht aneinander angeglichen sind, welches als Formteil mit einem Profilführungsbereich (108,110;210,242;310;410) aus einem thermoplastischen Elastomer getrennt von den Dichtungsprofilsträngen (106;240;306;470) geformt ist, wobei der Profilführungsbereich an einer Außenwand eines eingesteckten Dichtungsprofilstrangs zur Anlage kommt.

2. Dichtungsverbindungselement nach Anspruchs 1, **dadurch gekennzeichnet, daß** der Profilführungsbereich dünnwandig, vorzugsweise gegen Null auslaufend ausgeführt ist.

3. Dichtungsverbindungselement nach Anspruch 1 oder 2, **gekennzeichnet durch** mindestens einen Halteabschnitt (242;350,352) zum Anklemmen des Dichtungsverbindungselements an einen zu verbindenden Dichtungsprofilstrang (240;306).

4. Dichtungsverbindungselement nach einem der Ansprüche 1 bis 3, **gekennzeichnet durch** mindestens einen ersten Anschlag (130,132; 232;332:432), der als Widerlager für einen mit dem Dichtungsverbindungselement steckend zu verbindenden Dichtungsprofilstrang (106;306;470) ausgebildet ist.

5. Dichtungsverbindungselement nach einem der Ansprüche 1 bis 4, **gekennzeichnet durch** mindestens einen Kernabschnitt (128;228) zum Aufstecken einer Hohlkammer (118) eines Dichtungsprofilstrangs (106).

6. Dichtungsverbindungselement nach einem der Ansprüche 1 bis 5, **gekennzeichnet durch** eine zu einer Gehrungsebene symmetrische Ausbildung Verbindung zweier gleicher Dichtungsprofilstränge.

7. Dichtungsverbindungselement nach Anspruch 6, **gekennzeichnet durch** eine Gehrungsebene, die unter 15°, 30°, 45°, 60° oder 75° zur Einsteckrichtung der Dichtungsprofile verläuft.

8. Dichtungsverbindungselement nach einem der Ansprüche 1 bis 5, **gekennzeichnet durch** einen Halteabschnitt (242) zur Befestigung eines Endes eines ersten Dichtungsprofilstrangs an einem durchlaufenden Dichtungsprofilstrang (240).

9. Dichtungsendstück für Dichtungsprofilstränge, welches als Formteil mit einem Profilführungsbereich aus einem thermoplastischen Elastomer getrennt von den Dichtungsprofilsträngen geformt ist wobei der Profilführungsbereich an einer Außenwand eines eingesteckten Dichtungsprofilstrangs zur Anlage kommt.

10. Dichtungsendstück nach Anspruch 9, **gekennzeichnet durch** eine Abschlußwand zum Verschluß einer Hohlkammer eines Dichtungsprofilstrangs.

11. Dichtung mit mindestens einem Dichtungsprofilstrang (106;240;306;470) und einem Dichtungsverbindungselement (100;200;300;400) gemäß einem der Ansprüche 1 bis 8 und/oder einem Dichtungsendstück gemäß einem der Ansprüche 9 oder 10.

12. Dichtung nach Anspruch 11, **dadurch gekennzeichnet, daß** der Dichtungsprofilstrang (106;240;306;470) und das Dichtungsverbindungselement bzw. das Dichtungseadstück zunächst lose gesteckt und dann miteinander verklebt oder verschweißt sind.

## Claims

1. Sealing connecting element (100;200;300;400) for connecting in a sealing manner at least one first and one second sealing profile strip (106;240;306;470), whose ends are not aligned with each other, which sealing connecting element is formed separately from the sealing profile strips (106;240;306;470) as a molded part with a profile guide region (108;110;210,242;310;410) from a thermoplastic elastomer, wherein the profile guide region moves into position against an outer wall of an inserted sealing profile strip.

2. Sealing connecting element according to claim 1, **characterised in that** the profile guide region is formed having a thin wall, preferably running out to zero.

3. Sealing connecting element according to claim 1 or 2, **characterised by** at least one holding portion (242;350,352) for clamping the sealing connecting element to a sealing profile strip (240;306) which is to be connected.

4. Sealing connecting element according to any one of the claims 1 to 3, **characterised by** at least one first stop (130,132;232;332;432) which is formed as a counter bearing for a sealing profile strip (106;306;470) which is to be connected to the sealing connecting element in an inserting manner.

5. Sealing connecting element according to any one of the claims 1 to 4, **characterised by** at least one core portion (128;228) for fitting thereon a hollow chamber (118) of a sealing profile strip (106).

6. Sealing connecting element according to any one of the claims 1 to 5, **characterised by** a design, which is symmetrical with respect to a miter plane, for the purpose of connecting two like sealing profile strips.

7. Sealing connecting element according to claim 6, **characterised by** a miter plane which extends at 15°, 30°, 45°, 60° or 75° to the insertion direction of the sealing profiles.

8. Sealing connecting element according to any one of the claims 1 to 5, **characterised by** a holding portion (242) for attaching one end of a first sealing profile strip to a continuous sealing profile strip.

9. Sealing end piece for sealing profile strips, which is formed separately from the sealing profile strips as a molded part with a profile guide region from a thermoplastic elastomer, wherein the profile guide region moves into position against an outer wall of an inserted sealing profile strip.

10. Sealing end piece according to claim 9, **characterised by** an end wall for sealing a hollow chamber of a sealing profile strip.

11. Seal having at least one sealing profile strip (106;240;306;470) and one sealing connecting element (100;200;300;400) according to any one of the claims 1 to 8 and/or having a sealing end piece according to any one of the claims 9 or 10.

12. Seal according to claim 11, **characterised in that** the sealing profile strip (106;240;306;470) and the sealing connecting element or the sealing end piece are initially inserted in a loose manner and then adhered or welded together.

## Revendications

1. Raccord de joints d'étanchéité (100; 200; 300; 400) pour raccordement étanche d'au moins un premier et un deuxième rubans profilés d'étanchéité (106; 240; 306; 470) dont les extrémités ne sont pas adaptées l'une à l'autre, qui est réalisé séparément des rubans profilés d'étanchéité (106; 240; 306; 470), comme un préformé comportant une zone de guidage de profilé (108, 110; 210, 242; 310; 410) en un élastomère thermoplastique, la zone de guidage de profilé venant s'appliquer sur une paroi extérieure d'un ruban profilé d'étanchéité enfiché.

2. Raccord de joints d'étanchéité selon la revendication 1, **caractérisé en ce que** la zone de guidage de profilé est réalisée avec une paroi fine, se terminant de préférence par une épaisseur nulle.

3. Raccord de joints d'étanchéité selon la revendication 1 ou 2, **caractérisé par** au moins une partie de maintien (242; 350, 352) pour presser le raccord pour joints d'étanchéité sur un ruban profilé d'étanchéité (240; 306) à raccorder.

4. Raccord de joints d'étanchéité selon l'une des revendications 1 à 3, **caractérisé par** au moins une première butée (130, 132; 232; 332; 432), qui constitue un arrêt pour un ruban profilé d'étanchéité (106; 306; 470) à raccorder par enfichage avec le raccord de joints d'étanchéité.

5. Raccord de joints d'étanchéité selon l'une des revendications 1 à 4, **caractérisé par** au moins une partie de noyau (128; 228) pour l'enfichage d'une cavité (118) d'un ruban profilé d'étanchéité (106).

6. Raccord de joints d'étanchéité selon l'une des revendications 1 à 5, **caractérisé par** une constitution symétrique par rapport à un plan d'onglet pour raccordement de deux rubans profilés d'étanchéité similaires.

7. Raccord de joints d'étanchéité selon la revendication 6, **caractérisé par** un plan d'onglet faisant un angle de 15°, 30°, 45°, 60°ou 75° avec la direction d'enfichage des profilés d'étanchéité.

8. Raccord de joints d'étanchéité selon l'une des revendications 1 à 5, **caractérisé par** une partie de maintien (242) pour la fixation d'une extrémité d'un premier ruban profilé d'étanchéité à un ruban profilé d'étanchéité continu (240).

9. Pièce d'extrémité de joint d'étanchéité pour rubans profilés d'étanchéité, qui est réalisée séparément des rubans profilés d'étanchéité, comme un préformé comportant une zone de guidage de profilé en un élastomère thermoplastique, la zone de guidage de profilé venant s'appliquer sur une paroi extérieure d'un ruban profilé d'étanchéité enfiché.

10. Pièce d'extrémité de joint d'étanchéité selon la revendication 9, **caractérisée par** une paroi terminale pour la fermeture d'une cavité d'un ruban profilé d'étanchéité.

11. Joint d'étanchéité comportant au moins un ruban profilé d'étanchéité (106; 240; 306; 470) et un raccord de joints d'étanchéité (100; 200; 300; 400) selon l'une des revendications 1 à 8 et/ou une pièce d'extrémité de joint d'étanchéité selon l'une des revendications 9 ou 10.

12. Joint d'étanchéité selon la revendication 11, **caractérisé en ce que** le ruban profilé d'étanchéité (106; 240; 306; 470) et le raccord de joints d'étanchéité ou la pièce d'extrémité de joint d'étanchéité sont d'abord enfichés de manière lâche et ensuite collés ou soudés l'un à l'autre.
